# EUROPEAN PATENT SPECIFICATION

(11) **EP 2 902 622 B1**
(45) Date of publication and mention of the grant of the patent: **15.06.2016**
(21) Application number: 14197149.9
(22) Date of filing: 10.12.2014
(51) Int. Cl.: F03D 7/02, F03D 15/00

(54) **Wind power generator**
Windkraftgenerator
Générateur d'énergie éolienne

(30) Priority: 30.01.2014 JP 2014015465
(43) Date of publication of application: 05.08.2015
(73) Proprietor: Hitachi, Ltd., Tokyo 100-8280 (JP)
(72) Inventor: Yu, Juhyun, Tokyo, 100-8280 (JP); Saeki, Mitsuru, Tokyo, 100-8280 (JP); Tobinaga, Ikuo, Tokyo, 100-8280 (JP)
(74) Representative: MERH-IP Matias Erny Reichl Hoffmann Patentanwälte PartG mbB

(56) References cited:
- EP-A1- 2 559 896
- US-A1- 2013 272 842

## Description

### BACKGROUND OF THE INVENTION

### 1. Field of the Invention

The present invention relates to a wind power generator.

### 2. Description of the Related Art

The wind power generation has been increasingly introduced from the standpoints of securing stable energy resources and preventing global warming, but on the other hand, it is becoming obvious that there is a problem in which a planned power generation amount cannot be obtained in some installation sites because of design management problems, and troubleshooting and maintenance handling problems in technical aspects, and also various problems caused by peculiar weather conditions in respective regions. Therefore, approaches are made to solve the above-mentioned problems and improve availability of a wind power generation facility.

Failure and accidents mainly occur at a "blade" and a "control device" in the wind power generator, but equally, troubles related to "yaw control" occur with high frequency. Therefore, improving reliability and durability with respect to components, such as a gearbox and a bearing that constitute a yaw actuator, is an important object.

There is a related art, JP-2007-198167-A, in this technical field. JP-2007-198167-A discloses a horizontal axial wind turbine in which a rotor including a hub and at least two blades, a nacelle pivotably supporting the rotor via a main shaft connected to the hub, a tower supporting the nacelle rotatable in a yawing direction, and a rotary damper that imposes, on yawing rotation of the nacelle, resistance torque which increases along with increase of rotary speed. Further, also disclosed is the horizontal axial wind turbine in which both an output shaft of the rotary damper and a shaft fixed with a pinion gear are actuated in an interlocking manner, converting the rotary speed of the output shaft of the rotary damper to a low speed.

According to the above-described horizontal axial wind turbine, the rotary damper has a characteristic in which the resistance torque is increased along with increase of the rotary speed, and the resistance torque having such a characteristic is imposed on yawing rotation of the nacelle. Due to this, larger yaw torque can be suppressed by the resistance torque of the rotary damper with the higher percentage, and motion energy of yawing rotation of the nacelle is dissipated by rotating the rotary damper. Consequently, there are effects in which a rapid speed change of yawing rotation at the nacelle is suppressed and the yawing rotary speed can be prevented from shifting to a high-speed area. Further, the resistance torque to be imposed on the nacelle from the rotary damper is relatively little in a low speed area, and therefore, there is an effect in which drive control can be executed for yaw rotation of the nacelle without imposing heavy burden to a drive motor.

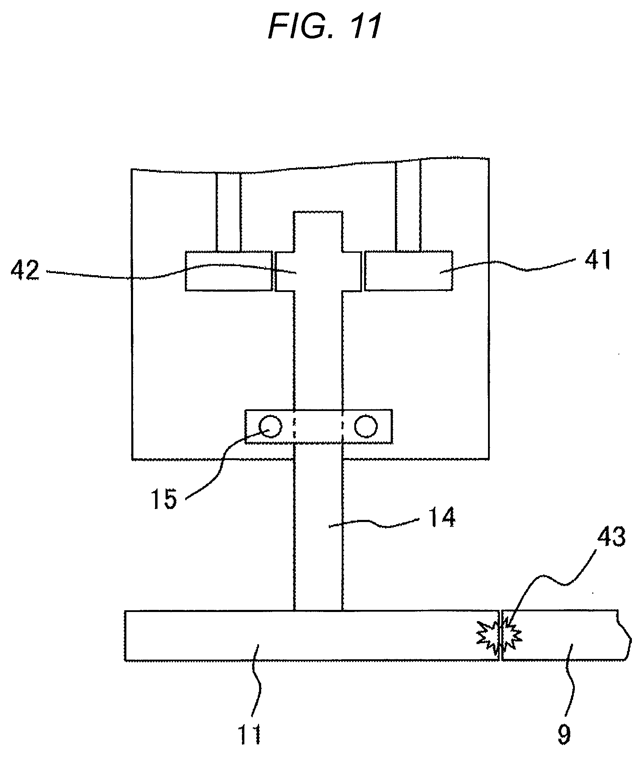

In a general wind power generator, a yaw driving unit is disposed at a connecting portion between a top portion of a tower and a nacelle in order that a rotor, namely, a plurality of blades and a hub can receive wind at a maximum, and orientation of the rotor, namely yaw control, is executed. In the case where deviation occurs between a wind direction and the orientation of the rotor, yaw control is executed by the yaw driving unit such that a surface of the rotor directly faces the wind. The yaw control is generally executed so as to change positions of the nacelle and the rotor with respect to the tower by engaging a pinion gear of a yaw actuator provided at the nacelle with a yaw bearing gear provided at the top portion of the tower and driving the yaw actuator. The yaw actuator includes a drive motor, a gearbox, a pinion gear, and so on, however, the yaw control becomes impossible in the event of adhesion or sticking caused by seizure, foreign matter biting, etc. between a pinion gear 11 and a yaw bearing gear 9, namely, adhesion at the yaw driving unit as illustrated in Fig. 11.

Further, there may a case in which an unexpected force is applied to the rotor and the nacelle when a typhoon comes and causes a trouble such as deform of a gear constituting the yaw driving unit. Such a trouble related to the "yaw control" is a serious problem in improving availability of a wind power generation facility because wind power generation facility is needed to be stopped for a relatively long time for repair due to a long procurement time for a component, etc., and also because a downwind wind turbine cannot be kept in a stand-by state by free yaw.

According to the horizontal axial wind turbine of JP-2007-198167-A, the drive control for yawing rotation of the nacelle can be executed without imposing burden on the drive motor, but it is not possible to prevent the above-mentioned troubles of adhesion at the yaw driving unit caused by seizure, foreign matter biting between the pinion gear and the yaw bearing gear, gear deforming, and so on.

An object of the present invention is to provide a wind power generator with high availability, wherein influence of yaw control trouble caused by failure of the yaw driving unit is minimized.

The present invention is a wind power generator characterized in including: a tower disposed onshore or offshore and configured to be a supporting pillar of a power generator; a nacelle disposed on the tower and including the power generator inside thereof; and a rotor disposed at one end of the nacelle and including a blade and a hub configured to receive wind and convert the wind to rotational energy, wherein a yaw driving unit disposed at a connecting portion between the tower and the nacelle and configured to control positions of the nacelle and the rotor with respect to the tower is provided, and the yaw driving unit includes a releasing unit configured to release yaw drive force from being transmitted.

Also, the present invention is a wind power generator characterized in including: a tower disposed onshore or offshore and configured to be a supporting pillar of a power generator; a nacelle disposed on the tower and including the power generator inside thereof; and a rotor disposed at one end of the nacelle and including a blade and a hub configured to receive wind and convert the wind to rotational energy, wherein a yaw driving unit disposed at a connecting portion between the tower and the nacelle and configured to control positions of the nacelle and the rotor with respect to the tower is provided, the yaw driving unit includes a yaw bearing gear disposed at the tower, a pinion gear to be engaged with the yaw bearing gear, a gearbox connected to the pinion gear, and a drive motor connected to the pinion gear via the gearbox, and the gearbox includes a releasing unit configured to release yaw drive force from being transmitted.

According to the present invention, influence of yaw control trouble caused by failure of the yaw driving unit can be minimized in the wind power generator, and the wind power generator having high availability can be implemented.

### BRIEF DESCRIPTION OF THE DRAWINGS

Other objects and advantages of the invention will become apparent from the following description of embodiments with reference to the accompanying drawings in which:
Fig. 1 is a diagram illustrating a general view of a wind power generator according to an embodiment of the present invention;
Fig. 2 is a diagram illustrating a vicinity of a top portion of a tower of the wind power generator according to the embodiment of the present invention;
Fig. 3 is a diagram illustrating the vicinity of the top portion of the tower of the wind power generator according to the embodiment of the present invention;
Fig. 4A is a diagram illustrating a part of a yaw actuator of the wind power generator according to the embodiment of the present invention;
Fig. 4B is a diagram illustrating a part of the yaw actuator of the wind power generator according to the embodiment of the present invention;
Fig. 5A is a diagram illustrating a part of a gearbox of the wind power generator according to the embodiment of the present invention;
Fig. 5B is a diagram illustrating a stopper of the wind power generator according to the embodiment of the present invention;
Fig. 5C is a diagram illustrating the stopper of the wind power generator according to the embodiment of the present invention;
Fig. 6A is a diagram illustrating a part of a yaw actuator of a wind power generator according to an embodiment of the present invention;
Fig. 6B is a diagram illustrating a part of the yaw actuator of the wind power generator according to the embodiment of the present invention;
Fig. 7A is a diagram illustrating a part of a yaw actuator of a wind power generator according to an embodiment of the present invention;
Fig. 7B is a diagram illustrating a part of the yaw actuator of the wind power generator according to the embodiment of the present invention;
Fig. 8A is a diagram illustrating a part of a yaw actuator of a wind power generator according to an embodiment of the present invention;
Fig. 8B is a diagram illustrating a part of the yaw actuator of the wind power generator according to the embodiment of the present invention;
Fig. 9A is a diagram illustrating a part of a yaw actuator of a wind power generator according to an embodiment of the present invention;
Fig. 9B is a diagram illustrating a part of the yaw actuator of the wind power generator according to the embodiment of the present invention;
Fig. 10A is a diagram illustrating a part of a yaw actuator of a wind power generator according to an embodiment of the present invention;
Fig. 10B is a diagram illustrating a part of the yaw actuator of the wind power generator according to the embodiment of the present invention; and
Fig. 11 is a diagram illustrating a part of a yaw actuator of a wind power generator in a related art.

### DESCRIPTION OF THE PREFERRED EMBODIMENTS

Preferred embodiments of the present invention will be described below with reference to the accompanying drawings.

### First embodiment

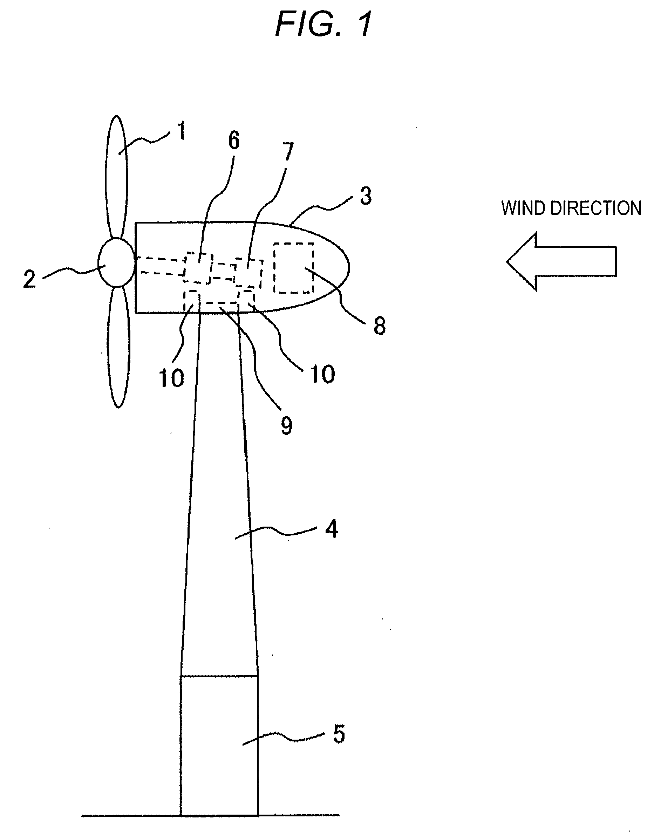

Fig. 1 is a diagram illustrating an entire configuration of a wind power generator according to an embodiment of the present invention. The wind power generator according to a first embodiment includes, as illustrated in Fig. 1, a foundation 5 disposed onshore or offshore and a nacelle 3 disposed on a tower 4 which is to be a supporting pillar of a power generator and including a step-up gear 6, the power generator 7, etc. inside thereof. A rotor formed of a hub 2 and a plurality of blades 1 is provided at an end of the nacelle 3. The rotor receives wind and converts the wind to rotational energy, and then transmits the rotational energy to the power generator 7 via the step-up gear 6 connected to the rotor, thereby generating power. Inside the nacelle 3, for example, a control panel 8 that includes control devices and instruments needed for controlling the wind power generator is also disposed.

A yaw bearing gear 9 and a plurality of yaw actuators 10 are disposed at a connecting portion between the tower 4 and the nacelle 3, and function as a yaw driving unit (yaw turning unit) configured to control positions of the nacelle 3, the rotor, namely, the hub 2 and the plurality of blades 1 with respect to the tower 4. Fig. 1 is an example of a downwind wind power generator in which a rotor including the hub 2 and the plurality of blades 1 is disposed at an end portion of the nacelle 3 on a downwind side.

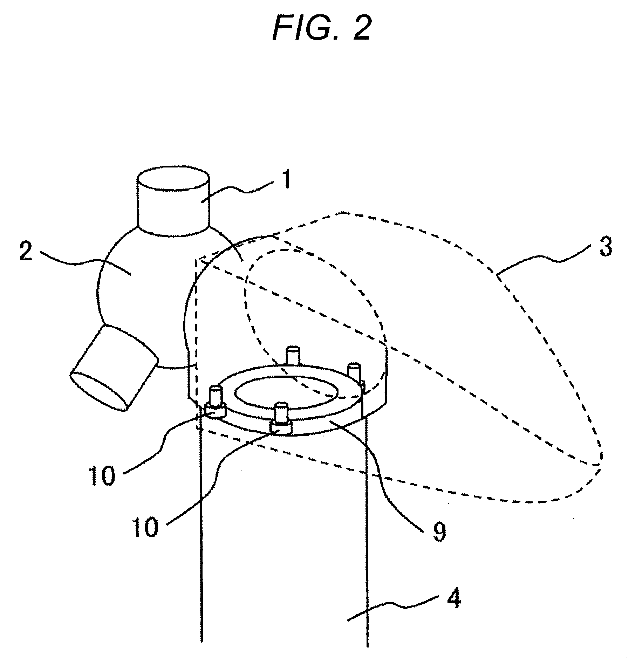

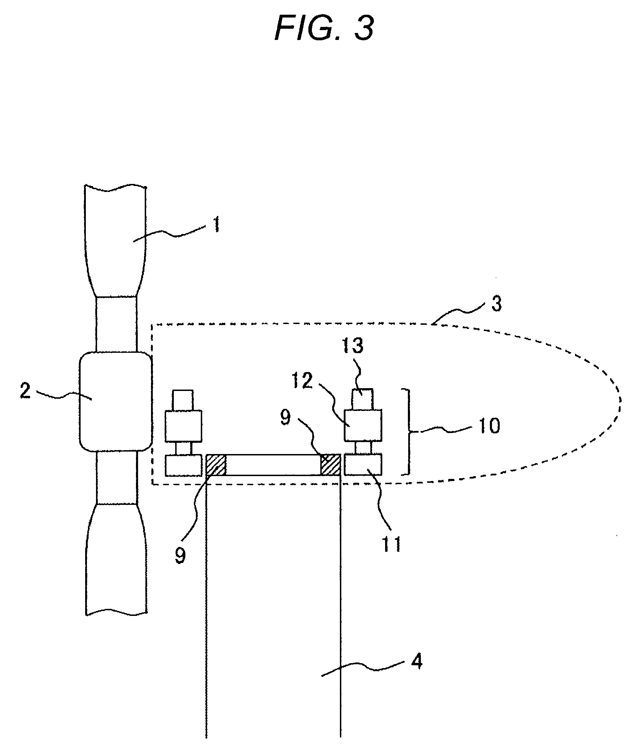

Figs. 2 and 3 are diagrams illustrating a vicinity of a top portion of the tower 4 of the wind power generator according to the embodiment of the present invention. In Figs. 2 and 3, the nacelle 3 is illustrated in a transparent view such that a state in the vicinity of the top portion of the tower 4 can be easily grasped. The yaw bearing gear 9 constituting a part of the yaw driving unit is provided at the top portion of the tower 4. A plurality of the yaw actuators 10 constituting a part of the yaw driving unit is provided at the nacelle 3. The number of yaw actuators 10 to be installed is depending on a type and a size of the wind power generator. For instance, in the case where a power generation amount (output) is approximately 2 MW, four yaw actuators are installed, and in the case where the power generation amount is approximately 5 MW, eight yaw actuators are installed so as to surround the top portion of the tower 4.

As illustrated in Fig. 3, the yaw actuator 10 is formed by joining a drive motor 13 which is to be a power source for yaw driving (yaw turning), a gearbox 12 that transmits drive force of the drive motor 13 to a pinion gear 11, and the pinion gear 11 disposed so as to be engaged with the yaw bearing gear 9.

The wind power generator according to the first embodiment is configured as described above. The yaw actuator 10 is drive thereby controlling the positions of the nacelle 3 and the rotor with respect to the tower 4 such that the rotor, namely, the hub 2 and the plurality of blades 1 receive wind at a maximum. Further, the positions of the nacelle 3 and the rotor with respect to the tower 4 are controlled by a control device, such as a yaw inverter at the control panel 8, based on data from an anemoscope or the like set at the wind power generator.

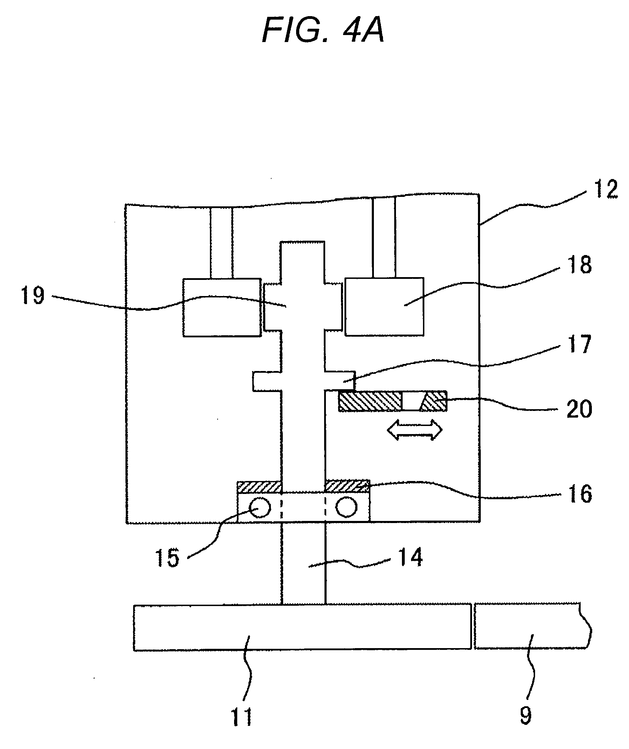

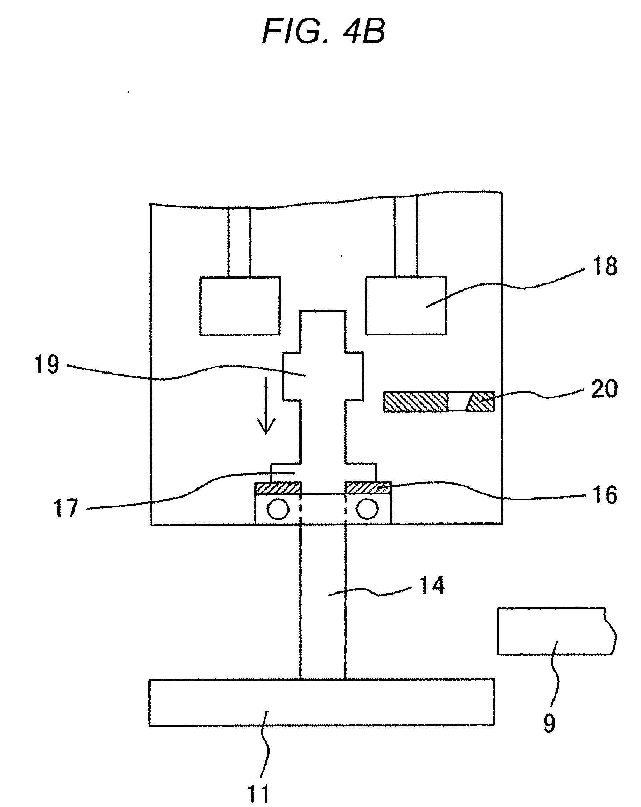

Functions and effects of the yaw actuator 10 according to the first embodiment will be described in detail, using Figs. 4A and 4B. Figs. 4A and 4B are diagrams illustrating a part of the gearbox 12 constituting the yaw actuator 10. The gearbox 12 includes combinations of gears of plural stages, namely, engagement portions of the gears, and Figs. 4A and 4B show a state of the engagement portions of the gears located close to a side of the engagement portion between the pinion gear 11 and the yaw bearing gear 9 out of the engagement portions of the gears of plural stages included inside the gearbox 12.

The gearbox 12 according to the first embodiment includes an output shaft 14 connected to the pinion gear 11, and the pinion gear 11 is engaged with the yaw bearing gear 9 as illustrated in Fig. 4A. A bearing 15 receiving the output shaft 14 is disposed inside the gearbox 12, and a sealing member 16 is disposed so as to contact the bearing 15. Here, oil is charged inside the gearbox 12, and the oil is prevented from leaking outside the gearbox 12 by the sealing member 16. The output shaft 14 includes a gear 19 on an opposite side of the portion connected to the pinion gear, and yaw drive force from the above-described drive motor 13 is transmitted from a gear 18, and transmitted to the pinion gear 11 via the output shaft 14.

A projection which is to be a supporting portion 17 is formed on the output shaft 14 inside the gearbox 12, and is supported by a stopper 20. The gear 18 is engaged with the gear 19, and yaw drive force from the drive motor 13 is transmitted to the pinion gear 11 via the output shaft 14 by the stopper 20 thus supporting the supporting portion 17 disposed at the output shaft 14. By this, the drive motor 13 is driven in accordance with wind directions, and the positions of the nacelle 3 and the rotor with respect to the tower 4 can be changed.

Meanwhile, as described above, in the case where adhesion or sticking occurs between the yaw bearing gear 9 and the pinion gear 11 due to seizure, foreign matter biting between the yaw bearing gear 9 and the pinion gear 11, or deform of a gear caused by a storm such as a typhoon, the yaw drive force of the drive motor 13 cannot be smoothly transmitted from the pinion gear 11 to the yaw bearing gear 9, and yaw control become impossible. Therefore, according to the wind power generator of the first embodiment, in the case where adhesion or sticking occurs between the yaw bearing gear 9 and the pinion gear 11, the stopper 20 is moved so as to separate from the supporting portion 17 as illustrated in Fig. 4B, thereby causing the pinion gear 11, the output shaft 14, and the gear 19 to fall below the gearbox 12 by their own weights. At the time of falling, the sealing member 16 functions as a cushion material of the supporting portion 17. Engagement between the yaw bearing gear 9 and the pinion gear 11 is disengaged by this, and the yaw drive force is released from being transmitted from the pinion gear 11 to the yaw bearing gear 9. As a result, operation becomes free yaw mode (weathercock mode) in which the positions of the nacelle 3 and the rotor with respect to the tower 4 are changed in accordance with the wind directions, and even in the case where adhesion occurs between the yaw bearing gear 9 and the pinion gear 11, the wind power generator can be continuously operated without any excessive force applied to the rotor and the tower 4 by the wind.

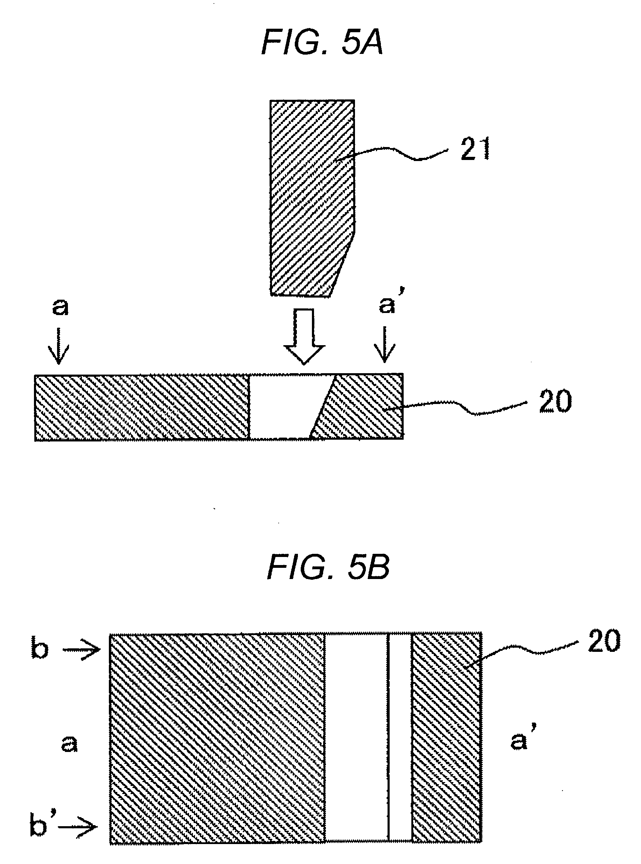

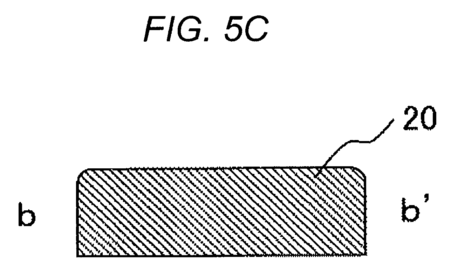

Operation of the above-described stopper 20 will be described, using Figs. 5A to 5C. As illustrated in Figs. 5A and 5B, an opening (notch) is provided in the stopper 20. In the case where adhesion occurs between the yaw bearing gear 9 and the pinion gear 11, a stopper releasing unit, such as a push stick 21, is inserted into the opening (notch) of the stopper 20, thereby moving the stopper 20 to separate from the supporting portion 17 and causing the pinion gear 11, output shaft 14, and gear 19 to fall below the gearbox 12. Fig. 5B is a plan view taken along a line a-a' in Fig. 5A. Also, Fig. 5C is a plan view taken along a line b-b' in Fig. 5B. As illustrated in Fig. 5C, the stopper 20 includes chamfered corners on a contacting surface with the supporting portion 17 so as to smoothly support the supporting portion 17.

Adhesion between the yaw bearing gear 9 and the pinion gear 11 is detected by monitoring current values and the like of the yaw inverter at the control panel 8, for example. By monitoring current rating of the yaw inverter or setting a predetermined interlock value for the current value of the yaw inverter, the above-described push stick 21 is manually pushed into the opening (notch) of the stopper 20 and the stopper 20 is released from supporting the supporting portion 17 in the case where the current value exceeds the current rating or exceeds the predetermined interlock value.

According to the wind power generator of the first embodiment, even in the case where adhesion or sticking occurs between the yaw bearing gear 9 and the pinion gear 11, namely, adhesion at the yaw driving unit occurs, an operating state becomes the free yaw mode (weathercock mode) by manually releasing the stopper 20 inside the gearbox 12 from supporting the supporting portion 17. In the free yaw mode, the positions of the nacelle 3 and rotor with respect to the tower 4 are changed in accordance with the wind direction. Consequently, the wind power generator can be continuously operated without excessive force applied to the rotor and the tower 4 by wind power. This minimizes influence of a yaw control trouble caused by failure of the yaw driving unit, and the wind power generator having high availability can be implemented.

### Second embodiment

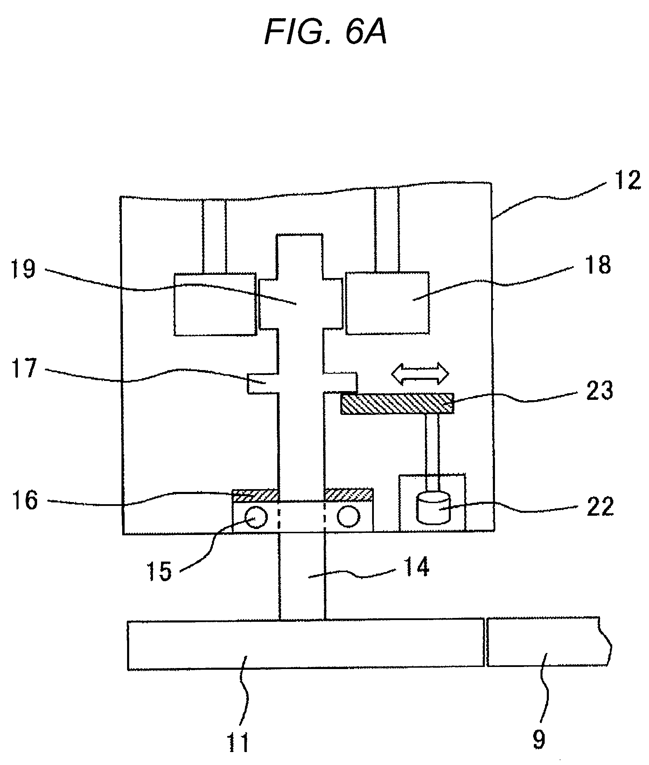

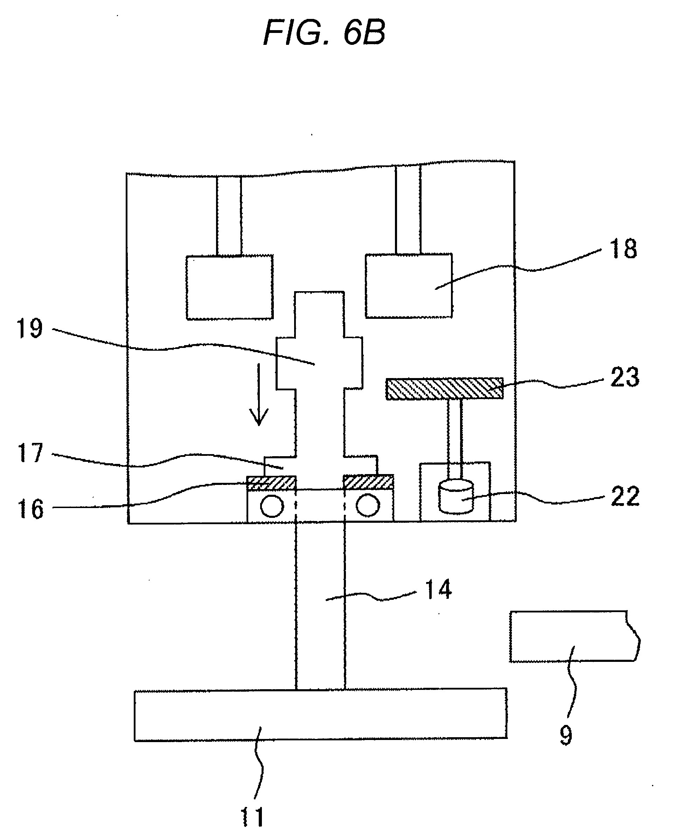

Figs. 6A and 6B are diagrams illustrating a part of a yaw actuator 10 in a wind power generator according to a different embodiment of the present invention. The wind power generator according to a second embodiment will be described, omitting a detailed description for portions common with portions described in a first embodiment.

A gearbox 12 constituting the yaw actuator 10 of the wind power generator according to the second embodiment has a configuration same as the first embodiment in a point that a projection to be a supporting portion 17 is provided at an output shaft 14. Further, another point same as the first embodiment is that a gear 18 and a gear 19 are engaged by the supporting portion 17 which is supported by a stopper 23, and yaw drive force from a drive motor 13 is transmitted to a pinion gear 11 via the output shaft 14.

A different point from the first embodiment is that the stopper 23 according to the second embodiment is connected to a drive motor 22, and a releasing unit configured to release the yaw drive force from being transmitted, namely, the stopper 23 is moved by the drive motor 22 which is a releasing unit driving device such that the stopper 23 is released from supporting the supporting portion 17. The stopper 23 is moved by the drive motor 22 so as to separate from the supporting portion 17, thereby causing the pinion gear 11, output shaft 14, and gear 19 to fall below the gearbox 12 by their own weights. Engagement between the yaw bearing gear 9 and the pinion gear 11 is disengaged by this, and the yaw drive force is released from being transmitted from the pinion gear 11 to the yaw bearing gear 9. As a result, operation becomes free yaw mode (weathercock mode) in which the positions of the nacelle 3 and the rotor with respect to the tower 4 are changed in accordance with the wind directions, and even in the case where adhesion or sticking occurs between the yaw bearing gear 9 and the pinion gear 11, the wind power generator can be continuously operated without any excessive force applied to the rotor and the tower 4 by the wind.

The stopper 23 is released by the drive motor 22 upon detecting adhesion between the yaw bearing gear 9 and pinion gear 11, same as the first embodiment. Same as the first embodiment, by monitoring current rating of a yaw inverter or setting a predetermined interlock value for a current value of the yaw inverter, the drive motor 22 is actuated to release the stopper 23 from supporting the supporting portion 17 in the case where a current value exceeds the current rating or exceeds the predetermined interlock value.

According to the wind power generator of the second embodiment, same as the first embodiment, even in the case where adhesion or sticking occurs between the yaw bearing gear 9 and the pinion gear 11, namely, adhesion occurs at the yaw driving unit, monitoring the current value of the yaw inverter or the like is executed in an interlocking manner and the stopper 23 inside the gearbox 12 is automatically released from supporting the supporting portion 17. Consequently, an operating state becomes the free yaw mode (weathercock mode) in which the positions of the nacelle 3 and rotor with respect to the tower 4 are changed in accordance with the wind directions, and the wind power generator can be continuously operated without excessive force applied to the rotor and the tower 4 by wind power. This minimizes influence of a yaw control trouble caused by failure of the yaw driving unit, and the wind power generator having high availability can be implemented.

### Third embodiment

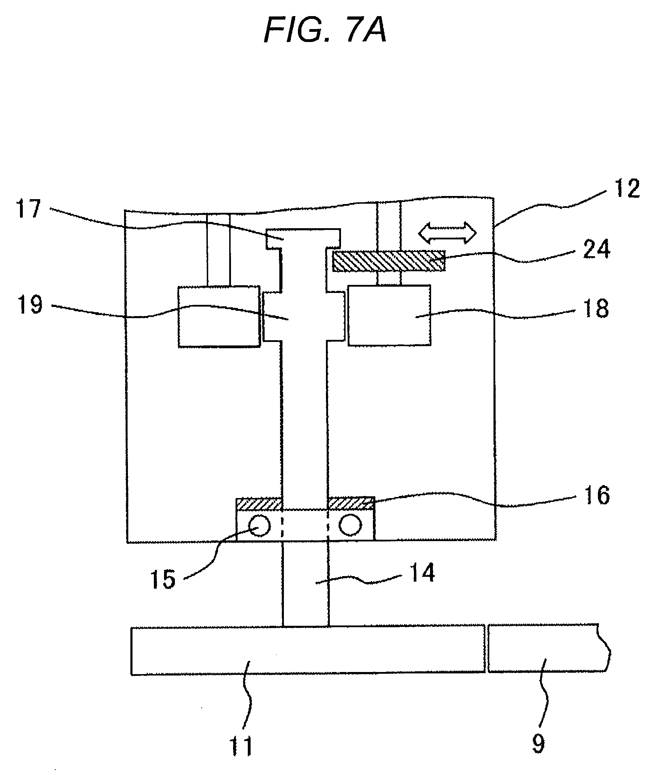

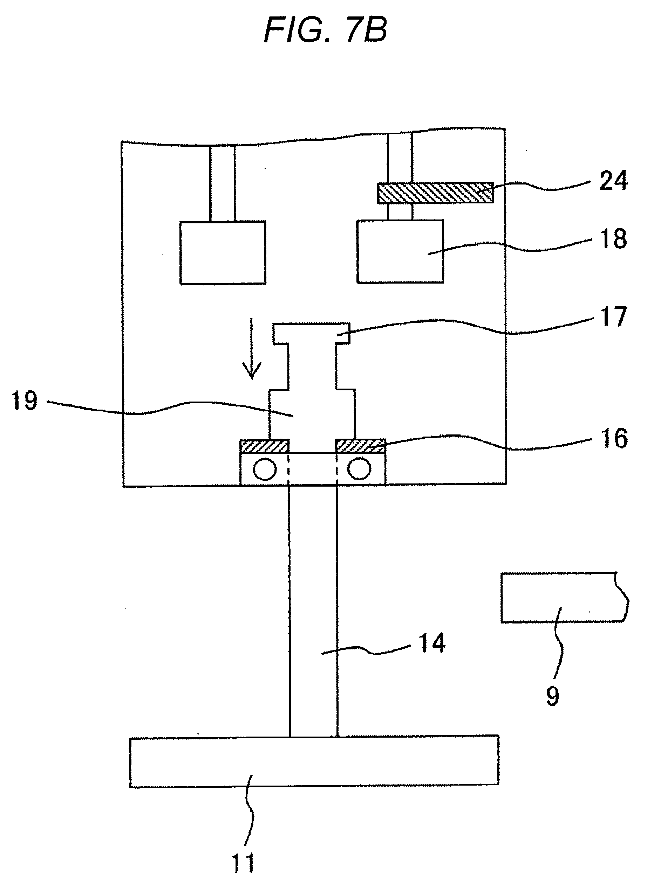

Figs. 7A and 7B are diagrams illustrating a part of a yaw actuator 10 in a wind power generator according to a different embodiment of the present invention. The wind power generator according to a third embodiment will be described, omitting a detailed description for portions common with portions described in a first embodiment.

A gearbox 12 constituting the yaw actuator 10 in the wind power generator according to the third embodiment has a configuration same as the first embodiment in a point that a projection which is to be a supporting portion 17 is provided at an output shaft 14. Further, another point same as the first embodiment is that a gear 18 and a gear 19 are engaged by the supporting portion 17 being supported by a stopper 24, and yaw drive force from a drive motor 13 is transmitted to a pinion gear 11 via the output shaft 14.

A point different from the first embodiment is that the supporting portion 17 and the stopper 24 according to the third embodiment are disposed, inside the gearbox 12, on a side of a more center portion of the gearbox 12 than an engagement portion of gears located on a side of an engagement portion between the pinion gear 11 and the yaw bearing gear 9. The stopper 24 is moved manually like the first embodiment or automatically by the drive motor like the second embodiment so as to separate from the supporting portion 17, thereby causing the pinion gear 11, output shaft 14, and a gear 19 to fall below the gearbox 12 by their own weights. Engagement between the yaw bearing gear 9 and the pinion gear 11 is disengaged by this, and the yaw drive force is released from being transmitted from the pinion gear 11 to the yaw bearing gear 9. As a result, operation becomes free yaw mode (weathercock mode) in which the positions of the nacelle 3 and the rotor with respect to the tower 4 are changed in accordance with a wind direction, and even in the case where adhesion or sticking occurs between the yaw bearing gear 9 and the pinion gear 11, the wind power generator can be continuously operated without any excessive force applied to the rotor and the tower 4 by the wind. This minimizes influence of a yaw control trouble caused by failure of the yaw driving unit, and the wind power generator having high availability can be implemented.

### Fourth embodiment

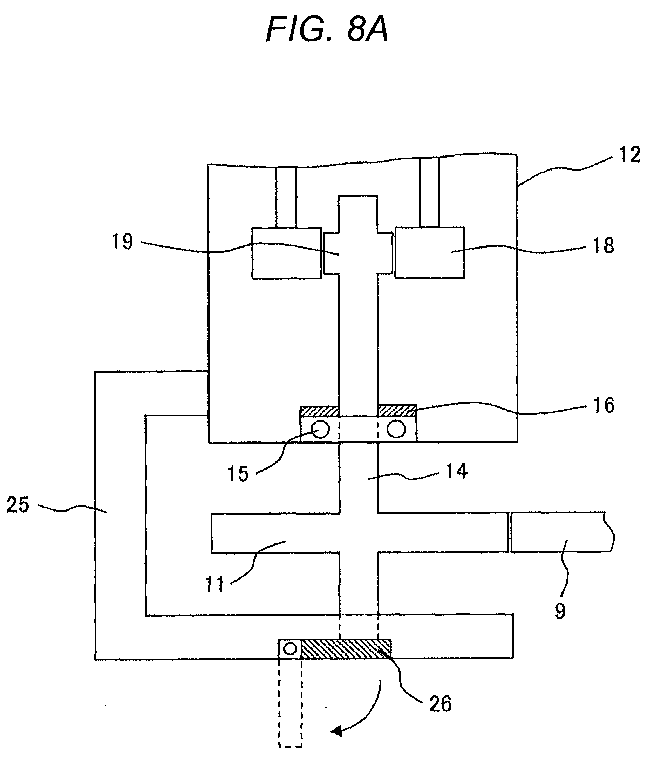

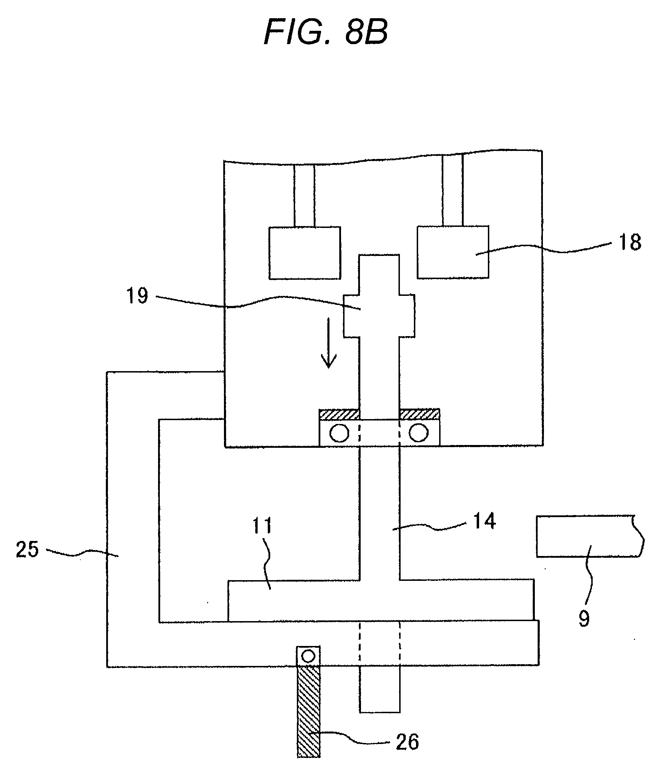

Figs. 8A and 8B are diagrams illustrating a part of a yaw actuator 10 in a wind power generator according to a different embodiment of the present invention. The wind power generator according to a fourth embodiment will be described, omitting a detailed description for portions common with portions described in a first embodiment.

The wind power generator according to the fourth embodiment is same as the first embodiment in a point that a gearbox 12 includes engagement potions of gears of plural stages inside thereof. The gearbox 12 according to the fourth embodiment, a bracket 25 is provided outside thereof, and a stopper 26 is disposed at the bracket 25 so as to support the output shaft 14. In the case where adhesion or sticking occurs between a yaw bearing gear 9 and a pinion gear 11, the stopper 26 disposed outside the gearbox 12 is released, thereby causing the output shaft 14 to fall below the gearbox 12 passing through the bracket 25. Consequently, engagement between the pinion gear 11 and the yaw bearing gear 9 is disengaged and yaw drive force is released from being transmitted. As a result, operation becomes free yaw mode (weathercock mode) in which the positions of the nacelle 3 and the rotor with respect to the tower 4 are changed in accordance with a wind directions, and even in the case where adhesion or sticking occurs between the yaw bearing gear 9 and the pinion gear 11, the wind power generator can be continuously operated without any excessive force applied to the rotor and the tower 4 by the wind.

The stopper 26 disposed outside the gearbox 12 is released upon detection of adhesion between the yaw bearing gear 9 and the pinion gear 11, same as the first embodiment. Same as the first embodiment, by monitoring current rating of a yaw inverter or setting a predetermined interlock value for a current value of the yaw inverter, the stopper 26 is released from supporting the output shaft 14 in the case where a current value exceeds the current rating or exceeds the predetermined interlock value. The stopper 26 is released manually like the first embodiment or automatically by a drive motor like the second embodiment. By releasing the stopper 26 from supporting the output shaft 14, the pinion gear 11, the output shaft 14, and a gear 19 fall below the gearbox 12 by their own weights.

Engagement between the yaw bearing gear 9 and the pinion gear 11 is disengaged by this, and the yaw drive force is released from being transmitted from the pinion gear 11 to the yaw bearing gear 9. As a result, operation becomes free yaw mode (weathercock mode) in which the positions of the nacelle 3 and the rotor with respect to the tower 4 are changed in accordance with the wind directions, and even in the case where adhesion or sticking occurs between the yaw bearing gear 9 and the pinion gear 11, the wind power generator can be continuously operated without any excessive force applied to the rotor and the tower 4 by the wind. This minimizes influence of a yaw control trouble caused by failure of the yaw driving unit, and the wind power generator having high availability can be implemented.

### Fifth embodiment

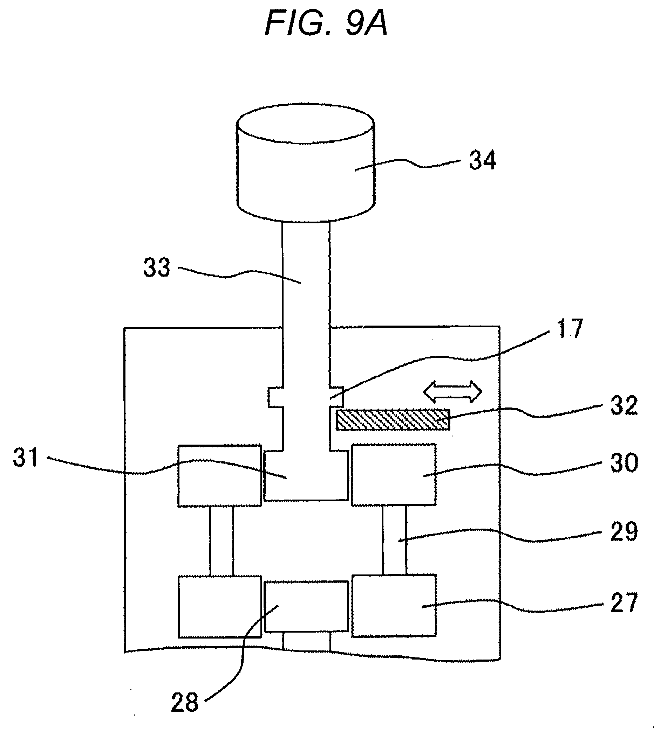

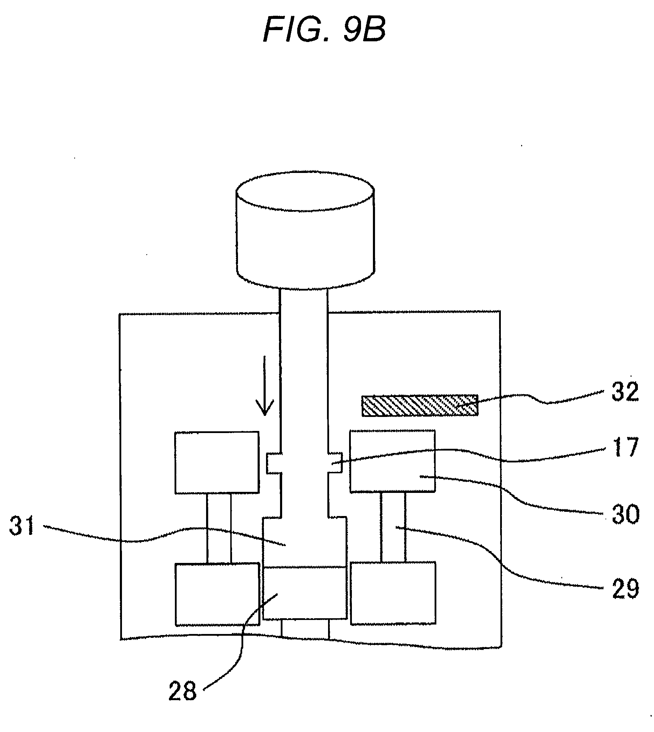

Figs. 9A and 9B are diagrams illustrating a part of a yaw actuator 10 in a wind power generator according to a different embodiment of the present invention. The wind power generator according to a fifth embodiment will be described, omitting a detailed description for portions common with portions described in a first embodiment.

A gearbox 12 constituting the yaw actuator 10 of the wind power generator according to the fifth embodiment is same as the first embodiment in a point of including engagement potions of gears of plural stages inside thereof. The gearbox 12 according to the fifth embodiment is different from other embodiments in a point that a projection which is to be a supporting portion 17 and a stopper 32 are disposed at an input shaft 33. Yaw drive force is released from being transmitted by disengaging engagement of gears disposed on a side of a drive motor 34 (drive motor 13 in Fig. 3) inside the gearbox 12.

The stopper 32 is moved manually like the first embodiment or automatically by a drive motor like a second embodiment so as to separate from the supporting portion 17, thereby causing the input shaft 33 and a gear 31 to fall downward by their own weights. By this, engagement between a gear 30 and the gear 31 is disengaged and the yaw drive force is released from being transmitted to the gear 31 and gear 30.

The stopper 32 is released executed upon detecting adhesion between the yaw bearing gear 9 and the pinion gear 11, same as the first embodiment. Same as the first embodiment, by monitoring current rating of a yaw inverter or setting a predetermined interlock value for a current value of the yaw inverter, the stopper 32 is released from supporting the supporting portion 17, namely, the input shaft 33 in the case where a current value exceeds the amperage rating or exceeds the predetermined interlock value. The stopper 32 is released manually like the first embodiment or automatically by a drive motor like a second embodiment. The input shaft 33 and the gear 31 fall downward by their own weights by releasing the stopper 32 from supporting the supporting portion 17.

By this, engagement between a gear 30 and the gear 31 is disengaged and the yaw drive force is released from being transmitted to the gear 31 and gear 30. As a result, operation becomes free yaw mode (weathercock mode) in which the positions of the nacelle 3 and the rotor with respect to the tower 4 are changed in accordance with the wind directions, and even in the case where adhesion or sticking occurs between the yaw bearing gear 9 and the pinion gear 11, the wind power generator can be continuously operated without any excessive force applied to the rotor and the tower 4 by the wind. This minimizes influence of a yaw control trouble caused by failure of the yaw driving unit, and the wind power generator having high availability can be implemented.

### Sixth embodiment

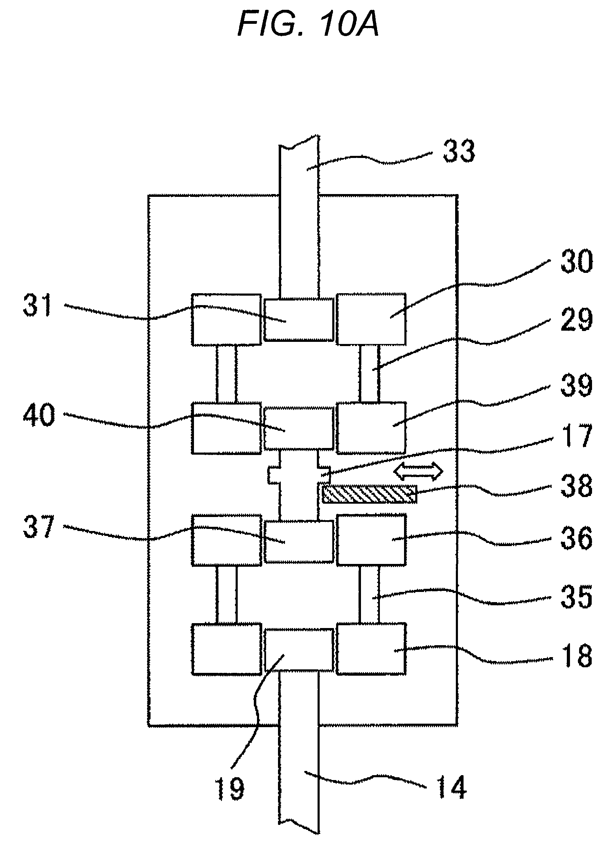

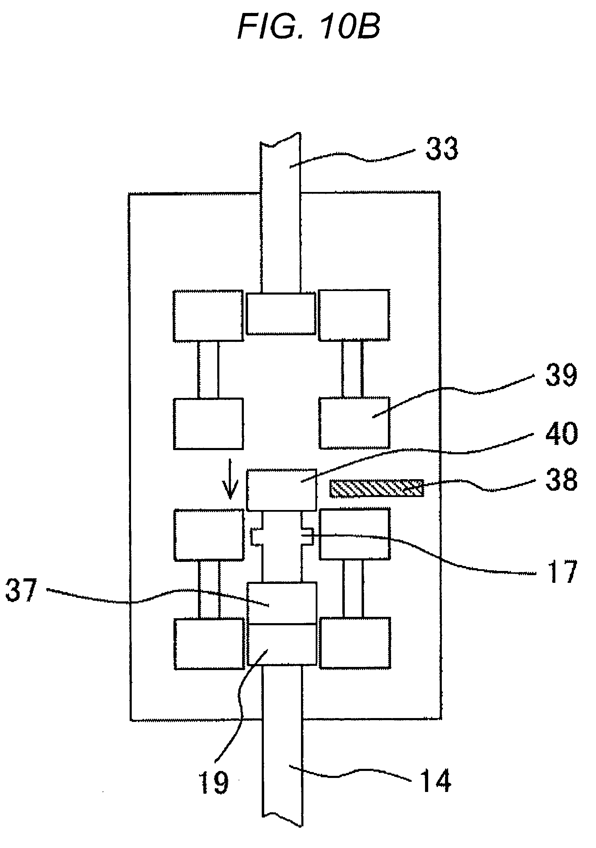

Figs. 10A and 10B are diagrams illustrating a part of a yaw actuator 10 in a wind power generator according to a different embodiment of the present invention. The wind power generator according to a sixth embodiment will be described, omitting a detailed description for portions common with portions described in a first embodiment.

A gearbox 12 constituting the yaw actuator 10 of the wind power generator according to the sixth embodiment is same as the first embodiment in a point of including engagement potions of gears of plural stages inside thereof. According to the gearbox 12 of the sixth embodiment, yaw drive force is released from being transmitted by disengaging engagement of gears disposed in a center portion inside the gearbox.

A projection to be a supporting portion 17 is disposed at a shaft portion that connects a gear 37 to a gear 40 positioned at the center portion of the gearbox 12, and is supported by a stopper 38. The stopper 38 is moved manually like the first embodiment or automatically by a drive motor like a second embodiment so as to separate from the supporting portion 17, thereby causing the gears 37, gear 40, and shaft connecting these gears, which are positioned at the center portion of the gearbox 12, to fall downward by their own weights. By this, engagement between a gear 36 and the gear 37 and between a gear 39 and the gear 40 is disengaged, and yaw drive force from the gear 39 to the gear 40 and the yaw drive force from the gear 37 to the gear 36 are released from being transmitted.

The stopper 38 is released upon detecting adhesion between a yaw bearing gear 9 and a pinion gear 11, same as the first embodiment. Same as the first embodiment, by monitoring current rating of a yaw inverter or setting a predetermined interlock value for a current value of the yaw inverter, the stopper 38 is released from supporting the supporting portion 17 disposed at the shaft portion connecting the gear 37 to the gear 40 in the case where a current value exceeds the amperage rating or exceeds the predetermined interlock value.

As a result, operation becomes free yaw mode (weathercock mode) in which the positions of the nacelle 3 and the rotor with respect to the tower 4 are changed in accordance with a wind direction, and even in the case where adhesion or sticking occurs between the yaw bearing gear 9 and the pinion gear 11, the wind power generator can be continuously operated without any excessive force applied to the rotor and the tower 4 by the wind. This minimizes influence of a yaw control trouble caused by failure of the yaw driving unit, and the wind power generator having high availability can be implemented.

Note that the present invention is not limited to the above-described embodiments and various modified examples are included. For example, the above-described embodiments have been described in detail in order to explain the present invention in a comprehensible manner, and the present invention is not necessarily limited to include all of the described configurations. Further, a part of the configuration according to one embodiment may be replaced by the configuration according to other embodiments, and further the configuration according to one embodiment can be added to the configuration according to other embodiments. Also, addition, deletion, and replacement of other configurations may be made on a part of the configurations according to the respective embodiments.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

The protection scope is defined by the set of claims.

## Claims

1. A wind power generator, comprising:
a tower (4) disposed onshore or offshore and configured to be a supporting pillar of a power generator (7);
a nacelle (3) disposed on the tower (4) and including the power generator (7) inside;
and
a rotor disposed at one end of the nacelle (3), and including a blade (1) and a hub (2) configured to receive wind and convert the wind to rotational energy,
a yaw driving unit (9, 10) disposed at a connecting portion between the tower (4) and the nacelle (3) and configured to control positions of the nacelle (3) and the rotor with respect to the tower (4) is provided, and the yaw driving unit (9, 10) includes a releasing unit (17, 20),
**characterized in that**
the releasing unit (17, 20) is configured to release yaw drive force from being transmitted, in the case where a detected control current of the yaw driving unit exceeds a rated value.

2. A wind power generator according to claim 1, wherein , the yaw driving unit (9, 10) includes a yaw bearing gear (9) disposed at the tower (4), a pinion gear (11) to be engaged with the yaw bearing gear (9), a gearbox (12) connected to the pinion gear (11), and a drive motor (13) connected to the pinion gear (11) via the gearbox (12), and wherein
the gearbox (12) includes the releasing unit (17, 20).

3. The wind power generator according to claim 2, wherein
the gearbox (12) includes engagement portions of gears of plural stages (27, 30) inside, and
the releasing unit (17, 20) is adapted to disengage, inside the gearbox (12), engagement between the gears disposed on a side of the engagement portion between the pinion gear (11) and the yaw bearing gear (9), by which yaw drive force is released from being transmitted.

4. The wind power generator according to claim 3, wherein the releasing unit (17, 20) is disposed, inside the gearbox (12), on a side of a more center portion of the gearbox (12) than the engagement portions of gears disposed on the side of the engagement portion between the pinion gear (11) and the yaw bearing gear (9).

5. The wind power generator according to claim 2, wherein the gearbox (12) includes
engagement portions of gears of plural stages inside, and
the releasing unit (17, 20) is adapted to disengage, inside the gearbox (12), engagement of the gears disposed at the center portion of the gearbox (12), by which yaw drive force is released from being transmitted.

6. The wind power generator according to claim 2, wherein the gearbox (12) includes
engagement portions of gears of plural stages inside, and
the releasing unit disengages engagement of the gears disposed on a side of the drive motor (13) inside the gearbox (12), by which yaw drive force is released from being transmitted.

7. The wind power generator according to claim 2, wherein the gearbox (12) includes
engagement portions of gears of plural stages inside, and
the releasing unit is disposed outside the gearbox (12) and disengages, inside the gearbox (12), engagements of gears disposed on a side of an engagement portion between the pinion gear (11) and the yaw bearing gear, by which yaw drive force is released from being transmitted.

8. The wind power generator according to any one of claims 2 to 7, wherein the releasing unit manually releases yaw drive force from being transmitted.

9. The wind power generator according to any one of claims 2 to 7, wherein the releasing unit automatically releases yaw drive force from being transmitted by a
releasing unit driving device configured to drive the releasing unit.

10. The wind power generator according to any one of claims 2 to 9, wherein wind power generator is adapted that, in the case where yaw drive force of the yaw driving unit is released by the releasing unit from being transmitted, an operation state becomes free yaw mode in which positions of the nacelle (3) and the rotor with respect to the tower (4) are changed in accordance with wind directions.

## Patentansprüche

1. Windkraftgenerator, der Folgendes umfasst:
einen Turm (4), der auf dem Festland oder vor der Küste angeordnet ist und als eine Tragsäule eines Kraftgenerators (7) konfiguriert ist;
eine Gondel (3), die auf dem Turm (4) angeordnet ist und in sich den Kraftgenerator (7) enthält; und
einen Rotor, der an einem Ende der Gondel (3) angeordnet ist und ein Blatt (1) und eine Nabe (2) enthält und konfiguriert ist, Wind aufzunehmen und den Wind in Rotationsenergie umzusetzen,
wobei eine Gierbewegungs-Antriebseinheit (9, 10), die an einem Verbindungsabschnitt zwischen dem Turm (4) und der Gondel (3) angeordnet ist und konfiguriert ist, Positionen der Gondel (3) und des Rotors in Bezug auf den Turm (4) zu steuern, vorgesehen ist und wobei die Gierbewegungs-Antriebseinheit (9, 10) eine Unterbrechungseinheit (17, 20) enthält,
**dadurch gekennzeichnet, dass**
die Unterbrechungseinheit (17, 20) konfiguriert ist, die Übertragung einer Gierbewegungs-Antriebskraft zu unterbrechen, falls ein detektierter Steuerstrom der Gierbewegungs-Antriebseinheit einen Nennwert überschreitet.

2. Windkraftgenerator nach Anspruch 1, wobei die Gierbewegungs-Antriebseinheit (9, 10) ein Gierbewegungs-Lagerzahnrad (9), das am Turm (4) angeordnet ist, ein Ritzel (11), das in dem Gierbewegungs-Lagerzahnrad (9) in Eingriff ist, ein Getriebe (12), das mit dem Ritzel (11) verbunden ist, und einen Antriebsmotor (13), der über das Getriebe (12) mit dem Ritzel (11) verbunden ist, umfasst und wobei das Getriebe (12) die Unterbrechungseinheit (17, 20) enthält.

3. Windkraftgenerator nach Anspruch 2, wobei
das Getriebe (12) Eingriffabschnitte von Zahnrädern mehrerer Stufen (27, 30) in sich enthält und
die Unterbrechungseinheit (17, 20) dafür ausgelegt ist, in dem Getriebe (12) den Eingriff zwischen den Zahnrädern, die auf einer Seite des Eingriffabschnitts zwischen dem Ritzel (11) und dem Gierbewegungs-Lagerzahnrad (9) angeordnet sind, zu lösen, wodurch eine Übertragung der Gierbewegungs-Antriebskraft unterbrochen wird.

4. Windkraftgenerator nach Anspruch 3, wobei die Unterbrechungseinheit (17, 20) in dem Getriebe (12) auf einer Seite eines Abschnitts des Getriebes (12), der sich näher bei der Mitte als die Eingriffabschnitte der auf der Seite des Eingriffabschnitts zwischen dem Ritzel (11) und dem Gierbewegungs-Zahnrad (9) angeordneten Zahnräder befindet, angeordnet ist.

5. Windkraftgenerator nach Anspruch 2, wobei das Getriebe (12) Eingriffabschnitte von Zahnrädern mehrerer Stufen in sich enthält und
die Unterbrechungseinheit (17, 20) dafür ausgelegt ist, in dem Getriebe (12) den Eingriff der Zahnräder, die in dem Mittelabschnitt des Getriebes (12) angeordnet sind, zu lösen, wodurch die Übertragung der Gierbewegungs-Antriebskraft unterbrochen wird.

6. Windkraftgenerator nach Anspruch 2, wobei das Getriebe (12) Eingriffabschnitte von Zahnrädern mehrerer Stufen in sich enthält und
die Unterbrechungseinheit den Eingriff der Zahnräder, die auf einer Seite des Antriebsmotors (13) in dem Getriebe (12) angeordnet sind, löst, wodurch die Übertragung der Gierbewegungs-Antriebskraft unterbrochen wird.

7. Windkraftgenerator nach Anspruch 2, wobei das Getriebe (12) Eingriffabschnitte von Zahnrädern mehrerer Stufen in sich enthält und
die Unterbrechungseinheit außerhalb des Getriebes (12) angeordnet ist und in dem Getriebe (12) Eingriffe von Zahnrädern, die auf einer Seite eines Eingriffabschnitts zwischen dem Ritzel (11) und dem Gierbewegungs-Lagerzahnrad angeordnet sind, löst, wodurch die Übertragung der Gierbewegungs-Antriebskraft unterbrochen wird.

8. Windkraftgenerator nach einem der Ansprüche 2 bis 7, wobei die Unterbrechungseinheit die Übertragung der Gierbewegungs-Antriebskraft manuell unterbricht.

9. Windkraftgenerator nach einem der Ansprüche 2 bis 7, wobei die Unterbrechungseinheit die Übertragung der Gierbewegungs-Antriebskraft durch eine Unterbrechungseinheit-Antriebsvorrichtung, die konfiguriert ist, die Unterbrechungseinheit anzutreiben, automatisch unterbricht.

10. Windkraftgenerator nach einem der Ansprüche 2 bis 9, wobei der Windkraftgenerator dafür ausgelegt ist, dass in dem Fall, in dem die Übertragung der Gierbewegungs-Antriebskraft der Gierbewegungs-Antriebseinheit durch die Unterbrechungseinheit unterbrochen wird, ein Betriebszustand ein freier Gierbewegungsmodus wird, in dem Positionen der Gondel (3) und des Rotors in Bezug auf den Turm (4) in Übereinstimmung mit Windrichtungen geändert werden.

## Revendications

1. Générateur d'énergie éolienne, comprenant :
une tour (4) disposée sur un site à terre ou offshore et configurée pour être un pilier de support d'un générateur d'énergie (7) ;
une nacelle (3) sur la tour (4) et incluant le générateur d'énergie (7) à l'intérieur ; et
un rotor disposé à une extrémité de la nacelle (3), et incluant une pale (1) et un moyeu (2) configuré pour recevoir du vent et convertir le vent en énergie de rotation,
il est prévu une unité d'entraînement en orientation (9, 10) disposée à une portion de connexion entre la tour (4) et la nacelle (3) et configurée pour commander les positions de la nacelle (3) et du rotor par rapport à la tour (4), et
l'unité d'entraînement en orientation (9, 10) inclut une unité de relâchement (17, 20),
**caractérisé en ce que**
l'unité de relâchement (17, 20) est configurée pour relâcher la force d'entraînement en orientation pour ne pas être transmise, dans le cas où un courant de commande détecté de l'unité d'entraînement en orientation excède une valeur prédéterminée.

2. Générateur d'énergie éolienne selon la revendication 1, dans lequel l'unité d'entraînement en orientation (9, 10) inclut un engrenage porteur en orientation (9) disposé au niveau de la tour (4), un pignon (11) destiné à être engagé avec l'engrenage porteur en orientation (9), une boîte d'engrenages (12) connectée au pignon (11), et un moteur d'entraînement (13) connecté au pignon (11) via la boîte d'engrenages (12), et dans lequel
la boîte d'engrenages (12) inclut l'unité de relâchement (17, 20).

3. Générateur d'énergie éolienne selon la revendication 2, dans lequel la boîte d'engrenages (12) inclut des portions d'engagement d'engrenage de plusieurs étages (27, 30) à l'intérieur, et
l'unité de relâchement (17, 20) est adaptée à désengager, à l'intérieur de la boîte d'engrenages (12), l'engagement entre les engrenages disposés sur un côté de la portion d'engagement entre le pignon (11) et l'engrenage porteur en orientation (9), grâce à quoi une force d'entraînement en orientation et relâchée pour ne pas être transmise.

4. Générateur d'énergie éolienne selon la revendication 3, dans lequel l'unité de relâchement (17, 20) est disposée, à l'intérieur de la boîte d'engrenages (12), sur un côté d'une portion plus centrale de la boîte d'engrenages (12) que les portions d'engagement d'engrenages disposées sur le côté de la portion d'engagement entre le pignon (11) et l'engrenage porteur en orientation (9).

5. Générateur d'énergie éolienne selon la revendication 2, dans lequel la boîte d'engrenages (12) inclut des portions d'engagement d'engrenages de plusieurs étages à l'intérieur, et
l'unité de relâchement (17, 20) est adaptée à désengager, à l'intérieur de la boîte d'engrenages (12), l'engagement des engrenages disposés à la portion centrale de la boîte d'engrenages (12), grâce à quoi une force d'entraînement en orientation est relâchée pour ne pas être transmise.

6. Générateur d'énergie éolienne selon la revendication 2, dans lequel la boîte d'engrenages (12) inclut des portions d'engagement d'engrenages de plusieurs étages à l'intérieur, et
l'unité de relâchement désengage l'engagement des engrenages disposés sur un côté du moteur d'entraînement (13) à l'intérieur de la boîte d'engrenages (12), grâce à quoi une force d'entraînement en orientation est relâchée pour ne pas être transmise.

7. Générateur d'énergie éolienne selon la revendication 2, dans lequel la boîte d'engrenages (12) inclut des portions d'engagement d'engrenages de plusieurs étages à l'intérieur, et
l'unité de relâchement est disposée à l'extérieur de la boîte d'engrenages (12) et désengage, à l'intérieur de la boîte d'engrenages (12), les engagements d'engrenages disposés sur un côté d'une portion d'engagement entre le pignon (11) et l'engrenage porteur en orientation, grâce à quoi une force d'entraînement en orientation et relâchée pour ne pas être transmise.

8. Générateur d'énergie éolienne selon l'une quelconque des revendications 2 à 7, dans lequel l'unité de relâchement relâche manuellement la force d'entraînement en orientation pour ne pas être transmise.

9. Générateur d'énergie éolienne selon l'une quelconque des revendications 2 à 7, dans lequel l'unité de relâchement relâche automatiquement la force d'entraînement en orientation pour ne pas être transmise, par un dispositif d'entraînement d'unité de relâchement configurée pour entraîner l'unité de relâchement.

10. Générateur d'énergie éolienne selon l'une quelconque des revendications 2 à 9, dans lequel le générateur d'énergie éolienne est adapté de telle façon que, dans le cas où la force d'entraînement en orientation de l'unité d'entraînement en orientation est relâchée par l'unité de relâchement pour ne pas être transmise, un état de fonctionnement devient un mode en orientation libre dans lequel les positions de la nacelle (3) et le rotor par rapport à la tour (4) sont changées en accord avec les directions du vent.
